# EUROPÄISCHE PATENTSCHRIFT

(11) **EP 1 694 588 B1**
(45) Veröffentlichungstag und Bekanntmachung des Hinweises auf die Patenterteilung: **28.03.2007**
(21) Anmeldenummer: 04802983.9
(22) Anmeldetag: 22.12.2004
(51) Int. Cl.: B65G 17/00, B65G 35/06, B65G 47/26

(54) **FÖRDERSYSTEM FÜR WERKSTÜCKE ODER GEGENSTÄNDE**
TRANSPORT SYSTEM FOR WORKPIECES OR OBJECTS
SYSTEME DE TRANSPORT POUR PIECES OU OBJETS

(30) Priorität: 21.04.2004 DE 102004019922
(43) Veröffentlichungstag der Anmeldung: 30.08.2006
(73) Patentinhaber: Bär, Ralf, 75050 Gemmingen (DE)
(72) Erfinder: Bär, Ralf, 75050 Gemmingen (DE)
(74) Vertreter: Clemens, Gerhard
(86) Internationale Anmeldenummer: PCT/DE2004/002802
(87) Internationale Veröffentlichungsnummer: WO 2005/102876

(56) Entgegenhaltungen:
- FR-A- 2 626 858
- US-A- 5 046 598

## Beschreibung

### TECHNISCHES GEBIET

Die vorliegende Erfindung betrifft eine Fördersystem für Werkstücke oder Gegenstände mit einem Führungsprofil, Förderschlitten, die entlang des Führungsprofils bewegbar sind und jeweils eine Aufnahmeeinheit, insbesondere Palette oder Gondel, für zumindest ein Werkstück oder zumindest einen Gegenstand aufweisen, einer im Wesentlichen parallel zum Führungsprofil mittels eines Antriebsaggregats bewegbaren ersten Formschlusseinheit und einer mit der ersten Formschlusseinheit koppelbaren an jedem Förderschlitten jeweils gelagerten ersten Gegenformschlusseinheit.

### STAND DER TECHNIK

Es sind horizontal umlaufende Palettenfördersysteme mit aufreihender Wirkung bekannt. Nach einem ersten Prinzip werden die Paletten horizontal von einer Entladestelle zu einer Beladestelle transportiert, anschließend vereinzelt und einer Hub-Senk-Station zugeführt, die wiederum die einzelne Palette an einen Rücklauf übergibt, der an eine weitere Hub-Senk-Station angeschlossen ist, die die jeweilige Palette der Beladestation wieder zuführt.

Nach einem zweiten Prinzip ist ein weiteres horizontal umlaufendes Palettentransportsystem bekannt, das eine umlaufende Bandeinheit mit einem Bandantrieb aufweist und keine Hub-Senk-Station besitzt. Zur Mitnahme der Paletten wird ein Friktionselement eingesetzt, das beispielsweise als Friktionsritzel oder Blattfeder ausgebildet ist. Das dokument US-A- 5 046 598 offenbart ein solches palettentransportsystem. Der Nachteil dieses Systems ist der Verschleiß des Friktionselements. Ein vertikaler Palettentransport ist nicht möglich, da die Palette sicher mitgenommen werden muss, auf der anderen Seite aber im Staubetrieb ein gewisses Durchrutschen des Friktionselementes gegeben sein muss, damit die Transportkette weiterlaufen kann. Bei vielen bekannten Systemen, die nach diesem Prinzip funktionieren, kommt es deshalb beim Transport und im Bereich der Umlenkung häufig zu Funktionsstörungen beziehungsweise erhöhtem Verschleiß.

Es sind vertikale Transportsysteme bekannt, die nach dem Taktprinzip mit Kettenantrieb oder Seilantrieb arbeiten. Die Paletten sind dabei in einem festen Abstand untereinander vorhanden. Ein vertikales Transportsystem ist als Hubstation mit Speicherfunktion ausgebildet, die nach dem Prinzip "First in - First OUT" arbeitet. Es sind auch vertikale Transportsysteme bekannt, bei denen umlaufende, im festen Abstand angeordnete Gondeln eingesetzt werden.

Ein Fördersystem mit aufreihender Wirkung in vertikaler Richtung ist nicht bekannt.

### DARSTELLUNG DER ERFINDUNG

Ausgehend von dem genannten Stand der Technik liegt der vorliegenden Erfindung die Aufgabe beziehungsweise das technische Problem zugrunde, ein Fördersystem für Werkstücke oder Gegenstände der eingangs genannten Art anzugeben, das hinsichtlich seines Verwendungszweckes beziehungsweise Einsatzgebietes eine sehr große Variabilität aufweist, eine dauerhaft zuverlässige Funktion gewährleistet und wirtschaftlich hergestellt werden kann. Dabei soll wechselweise ein getakteter, aufgepufferter oder akkumulierender oder manueller Förderbetrieb auch als Vertikalförderer möglich sein.

Das erfindungsgemäße Fördersystem der eingangs genannten Art ist durch die Merkmale des unabhängigen Anspruchs 1 gegeben. Vorteilhafte Ausgestaltungen und Weiterbildungen sind Gegenstand der von dem unabhängigen Anspruch 1 direkt oder indirekt abhängigen Ansprüche.

Das erfindungsgemäße Fördersystem ist demgemäß gekennzeichnet durch eine erste Kopplungseinheit, mittels derer die Koppelung der ersten Formschlusseinheit mit der jeweiligen ersten Gegenformschlusseinheit wahlweise ein- beziehungsweise ausgeschaltet werden kann, eine im Wesentlichen parallel zum Führungsprofil verlaufende stationäre zweite Formschlusseinheit, eine mit der zweiten Formschlusseinheit koppelbare an jedem Förderschlitten jeweils gelagerte zweite Gegenformschlusseinheit und eine zweite Kopplungseinheit, mittels derer die Koppelung der zweiten Formschlusseinheit mit der jeweiligen zweiten Gegenformschlusseinheit wahlweise einbeziehungsweise ausgeschaltet werden kann.

Gemäß einer bevorzugten Ausgestaltung, weist jeder Förderschlitten eine ansteuerbare Steuereinrichtung auf, mittels derer die erste und zweite Kopplungseinheit angesteuert werden kann.

Eine besonders vorteilhafte Ausgestaltung, die in einfacher Art und Weise eine manuelle Förderbewegung ermöglicht, zeichnet sich dadurch aus, dass zumindest ein oder jeder Förderschlitten eine manuell betätigbare Schalteinheit zum Steuern des Schaltzustandes der ersten und zweiten Kopplungseinheit aufweist.

Erfindungsgemäß wird jeder Förderschlitten mit Energie versorgt. So zeichnet sich eine erste Ausführungsvariante dadurch aus, dass die Stromversorgung der Förderschlitten beziehungsweise der Steuereinrichtung und der ersten und zweiten Kopplungseinheit über eine parallel zum Führungsprofil verlaufende oder in dem Führungsprofil integrierte, abtastbare Stromschiene erfolgt.

Eine zweite Ausführungsvariante zeichnet sich dadurch aus, dass die Stromversorgung der Förderschlitten beziehungsweise der Steuereinrichtung und der ersten und zweiten Kopplungseinheit über eine an dem Förderschlitten angeordnete Energiespeichereinheit, insbesondere Akkumulator, erfolgt.

Eine steuerungstechnisch besonders einfach umsetzbare vorteilhafte Weiterbildung zeichnet sich dadurch aus, dass die Steuereinrichtung ein Relais oder eine ansteuerbare elektronische Schaltung, insbesondere programmierbaren Mikrochip, aufweist. In diesem Zusammenhang ist es vorteilhaft, zusätzlich zu der abtastbaren Stromschiene ein Bussystem mit Busschiene und Bussystemelektronik einzusetzen, so'dass jeder Führungsschlitten einzeln identifiziert und gezielt angesprochen werden kann. In diesem Fall fährt eine Elektronik, zum Beispiel ein bekanntes Busmodul, auf jeder Palette mit. Das Öffnen/Schließen beziehungsweise Schalten der'ersten und zweiten Kopplungseinheit erfolgt dann'direkt angesteuert, dezentral über diese mitfahrende Elektronik. Der Informationsaustausch zwischen auf jeder Palette mitfahrendem Busmodul und Steuerung erfolgt über das Bussystem. Es ist auch möglich, dass die auf der Palette angeordnete Steuerung einzeln für jede Palette über Funk angesprochen werden kann.

Eine konstruktiv besonders einfache Ausgestaltung, die eine einfache Steuerung jedes Förderschlittens erlaubt, zeichnet sich dadurch aus, dass der Förderschlitten zumindest eine Signalempfangseinheit aufweist, die von zumindest einer externen Signalgebereinheit beaufschlagbar ist und die die Steuereinrichtung entsprechend dem empfangenen Signal beaufschlagt, woraufhin die Steuereinrichtung die erste und/oder zweite Kopplungseinheit schaltet.

Eine besonders vorteilhafte Ausgestaltung, die einen robusten Aufbau besitzt und eine dauerhaft zuverlässige Funktion gewährleistet, zeichnet sich dadurch aus, dass die erste und/oder zweite Gegenformschlusseinheit ein Zahnrad beziehungsweise Ritzel aufweist, die erste Formschlusseinheit als umlaufende Kette, insbesondere Triplexkette, ausgebildet ist und die zweite Formschlusseinheit als Zahnstange oder starre Kette ausgebildet ist.

Eine weitere vorteilhafte Ausgestaltung, die einen kompakten Aufbau ermöglicht, zeichnet sich dadurch aus, dass die zweite Formschlusseinheit an dem Führungsprofil gelagert angeordnet ist.

Eine konstruktiv besonders einfache und kompakte Ausführungsvariante, die eine besonders wirtschaftliche Herstellung und einfache Ansteuerung ermöglicht, zeichnet sich dadurch aus, dass die erste Gegenformschlusseinheit mit der ersten Formschlusseinheit in Eingriff steht und eine am Förderschlitten drehbar gelagerte erste Drehwelle aufweist; die erste Kopplungseinheit als Kupplungs- oder Bremseinheit, insbesondere elektromagnetische Kupplungs- oder Bremseinheit, ausgebildet ist, die die erste Drehwelle mit dem Förderschlitten koppelt oder in einen Freilauf schaltet, und/oder dass die zweite Gegenformschlusseinheit mit der zweiten Formschlusseinheit in Eingriff steht und eine am Förderschlitten drehbar gelagerte zweite Drehwelle aufweist, die zweite Kopplungseinheit als Kupplungs- oder Bremseinheit, insbesondere elektromagnetische Kupplungs- oder Bremseinheit, ausgebildet ist, die die zweite Drehwelle mit dem Förderschlitten koppelt beziehungsweise fixiert oder in einen Freilauf schaltet.

Ebenfalls hinsichtlich eines kompakten Aufbaus zeichnet sich eine vorteilhafte Weiterbildung dadurch aus, dass die erste und zweite Kopplungseinheit auf der ersten beziehungsweise zweiten Drehwelle angeordnet sind.

Um zu verhindern, dass im Bereich der Umlenkung des Förderweges große Zwangskräfte entstehen, die den Verschleiß fördern, zeichnet sich eine besonders bevorzugte Ausgestaltung dadurch aus, dass die erste und/oder zweite Gegenformschlusseinheit über eine Lagereinheit an dem Förderschlitten drehbar gelagert sind, wobei die Lagereinheit in Richtung quer zur Förderrichtung verschieblich am Förderschlitten gelagert ist.

Eine hinsichtlich einer maximalen Variabilität optimierte vorteilhafte Ausgestaltung zeichnet sich dadurch aus, dass die Steuereinrichtung über eine externe weitere Steuereinrichtung ansteuerbar ist, die abhängig von den Randbedingungen des Fördersystems einzelne Förderschlitten gezielt anspricht und damit ein unterschiedlichster Förderbetrieb umgesetzt werden kann.

In einer bevorzugten, wirtschaftlich zu realisierenden und eine hohe Genauigkeit beim Positionieren der jeweiligen Palette erlaubende Ausführungsform ist die zumindest eine Signalempfangseinheit und die zumindest eine Signalgebereinheit als Lichtschrankeneinheit mit Empfänger und Sender ausgebildet.

Eine besonders bevorzugte Ausgestaltung zeichnet sich dadurch aus, dass für jeden Förderschlitten eine Abstandserfassungseinheit zum Erfassen des Abstandes eines nachfolgenden Förderschlittens von einem vorauslaufenden Förderschlitten vorhanden ist, die bei Unterschreiten/Überschreiten eines vorgegebenen Minimalabstandes ein Signal an die Steuereinrichtung abgibt, die daraufhin die Förderbewegung des nachfolgenden Förderschlittens unterbricht beziehungsweise veranlasst.

Um eine beliebige Palette an einer beliebigen Stelle des Förderweges in einfacher Art und Weise umsetzen zu können, zeichnet sich eine vorteilhafte Weiterbildung dadurch aus, dass eine Positionserfassungseinheit zum Erfassen der Position von Förderschlitten entlang des Förderweges vorhanden ist, die bei Erreichen einer vorgegebenen Position ein Signal an die Steuereinrichtung des jeweiligen Förderschlittens abgibt, die die Förder-bewegung des Förderschlittens daraufhin unterbricht.

Konstruktiv kann die Positionserfassungseinheit gemäß einem bevorzugten Ausführungsbeispiel dadurch umgesetzt werden, dass dass jeder Förderschlitten einen Initiator und eine Steuerfahne aufweist, wobei die Steuerfahne bei Erreichen des Minimalabstandes benachbarter Förderschlitten den Initiator des nachfolgenden Förderschlittens schaltet.

Um eine optimale Führung der Förderschlitten am Führungsprofil zu gewährleisten werden bevorzugt entsprechende Führungsmittel oder Führungselemente, insbesondere Führungsrollen, eingesetzt.

Um auch eine S-förmige Umlenkung entlang des Förderweges problemlos umsetzen zu können, zeichnet sich eine besonders vorteilhafte Ausgestaltung dadurch aus, dass gegenüberliegend am Führungsprofil angeordnete Führungsmittel vorhanden sind, die, insbesondere paarweise, auf einen am Förderschlitten drehbar gelagerten Drehschemel angeordnet sind.

Die erste Formschlusseinheit ist bevorzugt als über ein Antriebsaggregat antreibbare umlaufende Einheit ausgebildet, wobei das Antriebsaggregat in einer vorteilhaften Ausgestaltung eine Rutschkupplung aufweist, wodurch verhindert wird, dass bei eventuellen Störungen die erste Formschlusseinheit beschädigt wird.

Das Antriebsaggregat kann so ansteuerbar ausgebildet sein, dass wahlweise eine taktförmige, beschleunigte oder verzögerte Förderbewegung mit unterschiedlichen Beschleunigungswerten umgesetzt werden kann.

Das erfindungsgemäße Fördersystem kann problemlos auch als Vertikalförderer eingesetzt werden. Das Fördersystem besitzt aufgrund der oben geschilderten Eigenschaften eine aufreihende Wirkung, das heißt die einzelnen Förderschlitten werden taktunabhängig gefördert. Das System kann als Werkstückspeicher benutzt werden. Dabei können auf einer Abgabeseite Werkstücke aufgegeben und gleichzeitig an einer Abnahmestelle entnommen werden, während andere Förderschlitten auf der Förderstrecke unterwegs sind. Es können auch mehrere Belade-/Entnahmestellen vorgesehen sein. Die Be-/Entladung der Paletten kann manuell oder über ein automatisches Beladesystem, wie Roboter oder dergleichen erfolgen.

Durch die formschlüssige Verbindung der zweiten Formschlusseinheit mit der zweiten Gegenformschlusseinheit wird der jeweilige Förderschlitten im Falle der Unterbrechung der Förderbewegung auch in vertikaler Richtung (Vertikalförderer) sicher gehalten.

Auf den Einsatz eines Friktionselements wie im Stand der Technik kann vollständig verzichtet werden.

Eine besonders vorteilhafte Ausführungsvariante, die eine dauerhaft zuverlässige Funktion in Verbindung mit einem äußerst einfachen konstruktiven, wirtschaftlich herstellbaren Aufbau aufweist, zeichnet sich dadurch aus, dass im Bewegungszustand des Förderschlittens die erste Kopplungseinheit die erste Gegenformschlusseinheit in den Kopplungszustand mit der ersten Formschlusseinheit und die zweite Kopplungseinheit die zweite Gegenformschlusseinheit in den Freilauf schaltet und im Stoppzustand des Förderschlittens die erste Kopplungseinheit die erste Gegenformschlusseinheit in den Freilauf schaltet und die zweite Kopplungseinheit in den Kopplungszustand der zweiten Gegenformschlusseinheit mit der zweiten Formschlusseinheit schaltet beziehungsweise die zweite Gegenformschlusseinheit fixiert.

Bei einer konstruktiv einfach umzusetzenden Ausführungsvariante wird zum Transport der Förderschlitten eine sich bewegende Kette und eine ruhende, starre Kette oder Zahnstange als Formschlusseinheit eingesetzt. Die Gegenformschlusseinheiten sind als Ritzel ausgebildet und wechselweise mit der jeweiligen Formschlusseinheit im Eingriff, das heißt beim Transport des Förderschlittens ist das Ritzel der Transportkette starr geschaltet und das Ritzel der Zahnstange dreht durch, während beim Stopp des Förderschlittens das Ritzel der Transportkette durchdreht und das Ritzel der Zahnstange starr geschaltet ist. Die zweite Kopplungseinheit ist dabei bevorzugt als elektromagnetische Bremseinheit und die erste Kopplungseinheit bevorzugt als elektromagnetische Kupplungseinheit ausgebildet.

Im stromlosen Zustand kann sich das Ritzel der zweiten Gegenformschlusseinheit nicht bewegen, was eine zusätzliche Absturzsicherung bedeutet. Die Stromversorgung erfolgt über eine Stromschiene, wobei jeder Förderschlitten einen Schleifkontakt als Stromabnehmer besitzt. In einem Ausführungsbeispiel besitzt jeder Förderschlitten einen Initiator, um beim Auflaufen auf einen anderen Förderschlitten oder an den Be-/Entladestellen den Förderschlitten zu stoppen. Ein Staudruck wird dadurch bei entsprechender Einstellung einer Schaltfahne des vorausfahrenden Förderschlittens vorteilhaft vermieden. Durch einen zweiten Initiator und eine zusätzliche Spur der Stromschiene kann an den Stoppstellen sogar auf eine Vereinzelung der Förderschlitten verzichtet werden.

Vorteilhaft vorzusehende Stoppnocken an der Be- beziehungsweise Entladestelle stoppen den Förderschlitten bei Schalten des Initiators. Die Freigabe des jeweiligen Förderschlittens erfolgt bevorzugt durch eine logische UND-Verknüpfung von dem bedämpften Initiator unter Bestromung der Stromschiene.

Die Förderschlitten werden über eine Führung sicher in der Kurve geführt. Die Führung kann vorteilhaft in die Zahnstange direkt integriert sein. Dadurch wird sichergestellt, dass bei der Kurvenfahrt das Ritzel der ersten Gegenform-schlusseinheit des Förderschlittens nicht aus der Kette rutschen kann. Vorteilhaft wird die erste Formschlusseinheit als Triplex-Transportkette, das Umlenk-Kettenrad im Bereich der Umlenkstelle als Duplex-Kettenrad und das Ritzel an dem Förderschlitten als Einfach-Ritzel ausgebildet.

Das erfindungsgemäße Fördersystem bietet eine Vielzahl von Vorteilen, die nachfolgend beispielhaft aufgeführt werden.

So ist ein vertikaler, aufreihender Palettentransport möglich, wodurch sich ein geringer Platzverbrauch innerhalb von Produktionslinien umsetzen lässt. Das Fördersystem kann als Entkopplungsmodul zwischen Produktionslinien eingesetzt werden.

Bei manueller Beladung kann der Bediener aufgrund der auflaufenden Speicherfunktion des Systems sich für bestimmte Zeit entfernen, ohne dass die Funktionalität des Systems darunter leidet. Es kann problemlos ein "First in - First OUT"-Prinzip umgesetzt werden bei gleichzeitiger aufreihender Wirkung der einzelnen Förderschlitten. Die auflaufenden Förderschlitten verursachen keinen Staudruck, was sich günstig auf eine dauerhaft zuverlässige Funktionalität des Systems auswirkt. Darüber hinaus ist ein relativ geringer Verschleiß gegeben, da keine mechanischen Einrastvorgänge, insbesondere im Umlenkbereich, wie bei den bekannten Systemen, vorliegen. Das System lässt sich vertikal, horizontal und auch zum Beispiel als Montagesystem hochkant aufstellen. Das System ist wirtschaftlich herstellbar, da nur ein Hauptantrieb für die erste Formschlusseinheit beziehungsweise Kette eingesetzt werden muss.

Beim Aufbau mit Drehschemelausführung kann in Produktionslinien ein einfacher Durchgang geschaffen werden, zum Beispiel für die Durchfahrt von Staplern oder als Personendurchgang. Auf allen Paletten beziehungsweise Förderschlitten kann der Empfänger einer Lichtschranke montiert werden. An der entsprechenden Stoppstelle wird ein Sendeteil der Lichtschranke installiert. Damit können die Paletten gestoppt werden, wenn die Sender die Lichtschranke durchschalten. Am stationären Teil, das heißt am Sendeteil wird zur Weiterfahrt einfach die Spannung weggenommen. Dadurch fährt die Palette weiter. Dies stellt eine kostengünstige Lösung der Steuerung dar.

Mit dem erfindungsgemäßen Fördersystem ist es auch problemlos möglich, ein Einstellen von Werkstückträgern mit mehreren Werkstücken in die Gondeln/Paletten des Fördersystems zu ermöglichen. Auf die Gondeln/Paletten des Fördersystems können Werkstückträger, die sich im innerbetrieblichen Umlauf befinden, eingestellt werden. Dadurch entfällt das Umpacken von Werkstücken. Das Einstellen der innerbetrieblichen Werkstückträger kann auch automatisch über ein Be-/Entladegerät erfolgen. An den Stoppstellen zum Be-/Entladen der Werkstückträger können mehrere Positionen angefahren werden, zum Beispiel durch den Einsatz mehrerer Sender-Lichtschranken, die auf den entsprechenden Empfänger auf dem Förderschlitten beziehungsweise Palette/Gondel einwirken. Die Palette/Gondel takt mit der Genauigkeit der zweiten Formschlusseinheit (Zahnstange) . Durch das Vorsehen mehrerer Sender-Lichtschranken oder anderweitig gearteter Sensoren kann ein Entnahme-Roboter eingesetzt werden, der lediglich um eine Achse verschiebbar ist, und dadurch trotzdem eine Fläche (Verteilung der Werkstücke auf dem Werkstückträger) abgearbeitet werden kann.

Mit dem erfindungsgemäßen Fördersystem ist es auch möglich, die Rohteilzuführung und Fertigteilabführung am gleichen Band umzusetzen. Am gleichen Band kann die Zuführung von Teilen in einem Prozess und die Rückführung der bearbeiteten Teile an die Aufgabestelle stattfinden. Dies hat den Vorteil, dass der Bediener an der gleichen Position be- beziehungsweise entlädt. Es können auch mehrere automatische Prozesse, zum Beispiels Ein-/Ausschleusen für zusätzliche Bearbeitung über die Verkettung mit einem Band stattfinden.

Das erfindungsgemäße Fördersystem kann auch problemlos als Bestandteil eines Montagebandes eingesetzt werden. In einem derartigen Montagesystem können die umlaufenden Paletten oder Montagewagen aufgrund der möglichen individuellen Ansprechweise durch die Steuereinrichtung bereichsweise getaktet bewegt werden, bereichsweise ausgepuffert/akkumulierend bewegt werden oder manuell von einem Werker geschoben werden. Damit lassen sich zum Beispiel kurze Ausfallzeiten einzelner Prozesse durch Aufpuffern abfangen oder die Werker können flexibel in einem Bearbeitungs-/Montageprozess eingesetzt werden.

Das erfindungsgemäße Fördersystem kann auch im Rahmen eines Sortiersystems eingesetzt werden. Normalerweise sind die Paletten/Fächer eines Sortiersystems fest auf der Kette verbunden. Erfindungsgemäß können jedoch die einzelnen Paletten individuell angesprochen und der Abstand untereinander entsprechend geändert werden. Damit lassen sich verschiedenste Packbilder realisieren auch mit unterschiedlich großen Produkten. Es muss nur dafür gesorgt werden, dass die Produkte durch benachbarte in entsprechend variablem Abstand angeordnete Paletten sicher eingestellt werden können.

In einer erfindungsgemäßen Ausführungsvariante wird das erfindungsgemäße Fördersystem im Rahmen einer Palettieranlage eingesetzt. Dabei werden über ein taktweise arbeitendes Einlaufband dem Fördersystem taktweise Gegenstände zugeführt. Eine externe Steuereinrichtung ermittelt die Größe des jeweiligen zu palettierenden Gegenstandes vorab und veranlasst, dass die Förderschlitten in einem Abstand angeordnet werden, der dem jeweiligen aufzunehmenden Palettiergut entspricht. Die Förderschlitten stehen dann, taktweise an der Aufnahmeposition mit entsprechendem Abstand zur Aufnahme zur Verfügung. Dabei bilden die jeweiligen Paletten einen Aufnahmezug, der der Breite der Palette entspricht. Sobald dieser Aufnahmezug befüllt ist, wird er in eine Entnahmeposition verfahren, in der die Produkte auf die Palette geschoben werden. Gleichzeitig wird ein zweiter Zug von Paletten eingesetzt, der zuvor auf die jeweilige Geometrie der Palettiergegenstände eingestellt ist und der Aufnahmeposition'zugeführt wird beziehungsweise an dieser ansteht, sobald der erste Zug sich zur Entnahmeposition bewegt hat. Dabei wird ein Fördersystem eingesetzt, bei dem bevorzugt zwei parallel nebeneinander angeordnete Ketten eingesetzt werden. Die Förderbewegung des jeweiligen Zuges wird entsprechend der Taktzahl beziehungsweise Taktzeit des Einlaufbandes, der Transportzeit zur Entnahmestation und der Transportzeit zur Rückführbewegung in die Aufnahmeposition unter Umsetzung der von der externen Steuereinrichtung übermittelten Größe der jeweiligen durch benachbarte Paletten gebildete Aufnahmefächer umgesetzt.

Weitere Ausführungsformen und Vorteile der Erfindung ergeben sich durch die in den Ansprüchen ferner aufgeführten Merkmale sowie durch die nachstehend angegebenen Ausführungsbeispiele.

### KURZE BESCHEIBUNG DER ZEICHNUNG

Die Erfindung sowie vorteilhafte Ausführungsformen und Weiterbildungen derselben werden im Folgenden anhand der in der Zeichnung dargestellten Beispiele näher beschrieben und erläutert.

Es zeigen:
- Fig. 1: schematische Darstellung einer konstruktiven Ausführungsvariante eines Fördersystems mit mehreren Förderschlitten (ohne Darstellung der zugehörigen Paletten oder Gondeln) , das im aufreihenden/puffernden Betrieb arbeiten kann, wobei eine antreibbare Förderkette und eine stationäre Zahnstange als Formschlusseinheiten eingesetzt werden, in die entsprechende Gegenformschlusseinheiten des jeweiligen Förderschlittens eingreifen, in einer Draufsicht,
- Fig. 2: schematische Darstellung des Fördersystems gemäß Fig. 1 in einer Untersicht,
- Fig. 3: stark schematisierte Darstellung des Details A gemäß Fig. 1 bei sich bewegendem Förderschlitten,
- Fig. 4: stark schematisierte Darstellung des Details A gemäß Fig. 1 bei Förderschlitten in Stopp-Position,
- Fig. 5: schematische Seitenansicht der Darstellung eines Förderschlittens gemäß Fig. 3 beziehungsweise 4,
- Fig. 6: schematische Draufsicht auf eine konstruktive Ausgestaltung des Förderschlittens gemäß Detail A in Fig. 1,
- Fig. 7: schematischer Schnitt durch den Förderschlitten gemäß Schnittführung I - I in Fig. 6,
- Fig. 8: schematische Seitenansicht einer konstruktiven Ausführungsvariante gemäß'Fig. 1 in Ansichtsrichtung II - II,
- Fig. 9: schematische Perspektivdarstellung der einzelnen Bauteile eines Förderschlittens in Explosionsdarstellung (ohne Steuerungseinrichtung),
- Fig. 10: bis 13 schematische Darstellung der Ausgestaltung des Förderweges eines Fördersystems gemäß den oben genannten Figuren,
- Fig. 14: schematische Darstellung des Förderweges im Bereich eines S-kurvenartigen Verlaufs unter Einsatz von Drehschemeln für die Führungsmittel des Förderschlittens,
- Fig. 15: schematische Stirnlängsansicht eines Förderschlittens mit Palette und auf der Palette vorhandener Fixiereinheit gemäß der prinzipiellen Darstellung in Fig. 5,
- Fig. 16: schematische Seitenansicht eines Fördersystems, bei dem mehrere Förderschlitten zu einem Förderzug zusammengeschlossen sind,
- Fig. 17a, b: schematische Seitenansicht beziehungsweise Draufsicht auf einen Einsatz des Fördersystems, bei dem Werkstückträger zum Einsatz kommen, die mehrere Werkstücke aufweisen und deren Abarbeitung mit einem Be- oder Entladesystem mit nur einer horizontalen Achse möglich ist,
- Fig. 18: schematische Darstellung der Seitenansicht eines Fördersystems, bei dem die Be- beziehungsweise Entladung an derselben Position erfolgt und innerhalb des Fördervorgangs zusätzliche Bearbeitungsmöglichkeiten gegeben sind,
- Fig. 19: schematische Draufsicht auf die Umsetzung eines Montagebandes unter Einsatz des Fördersystems, bei dem bereichsweise getakteter Förderbetrieb, ausgepufferter/akkumulierender Förderbetrieb oder manueller Förderbetrieb möglich ist,
- Fig. 20, 21: schematische Draufsicht beziehungsweise Perspektivdarstellung des Einsatzes der Fördervorrichtung im Rahmen eines Palettiersystems.

### WEGE ZUM AUSFÜHREN DER ERFINDUNG

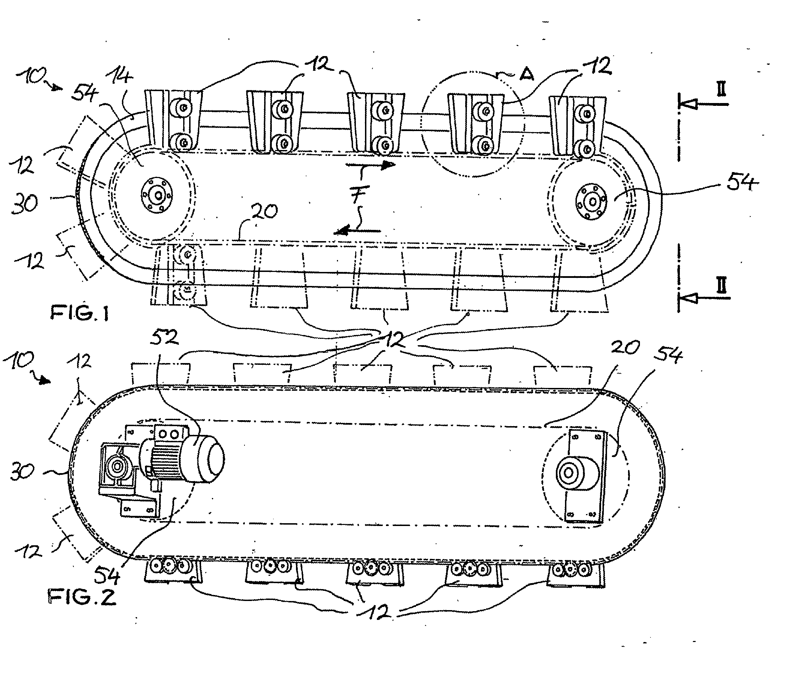

In den Figuren 1 und 2 ist schematisch ein Fördersystem 10 in einer Draufsicht beziehungsweise Untersicht dargestellt, das ein Führungsprofil 14 besitzt, an dem mehrere Förderschlitten 12 in Förderrichtung F verschieblich gelagert sind. Das Führungsprofil 14 ist als geschlossenes umlaufendes Führungsprofil mit sich gegenüberliegenden geradlinigen Verläufen ausgebildet mit jeweils eine Halbkreiskrümmung aufweisenden Seitenrandbereichen. An dem Führungsprofil 14 ist eine zweite Formschlusseinheit 30 vorhanden, die im Ausführungsbeispiel als nach außen weisende integrierte Zahnstange ausgebildet ist. Parallel nach innen zum Führungsprofil 14 versetzt ist eine umlaufende erste Formschlusseinheit 20 vorhanden, die im Ausführungsbeispiel als Kette ausgebildet ist und die im Endbereich jeweils über ein Drehkranzrad 54 geführt ist, wobei im Ausführungsbeispiel die Kette (Formschlusseinheit 20) als Triplex-Kette und die Drehkranzräder 54 als Doppeldrehkranzräder ausgebildet sind.

Das in Fig. 2 linke Drehkranzrad 54 wird über ein Antriebsaggregat 52 angetrieben, so dass sich die erste Formschlusseinheit 20 in Förderrichtung F bewegt.

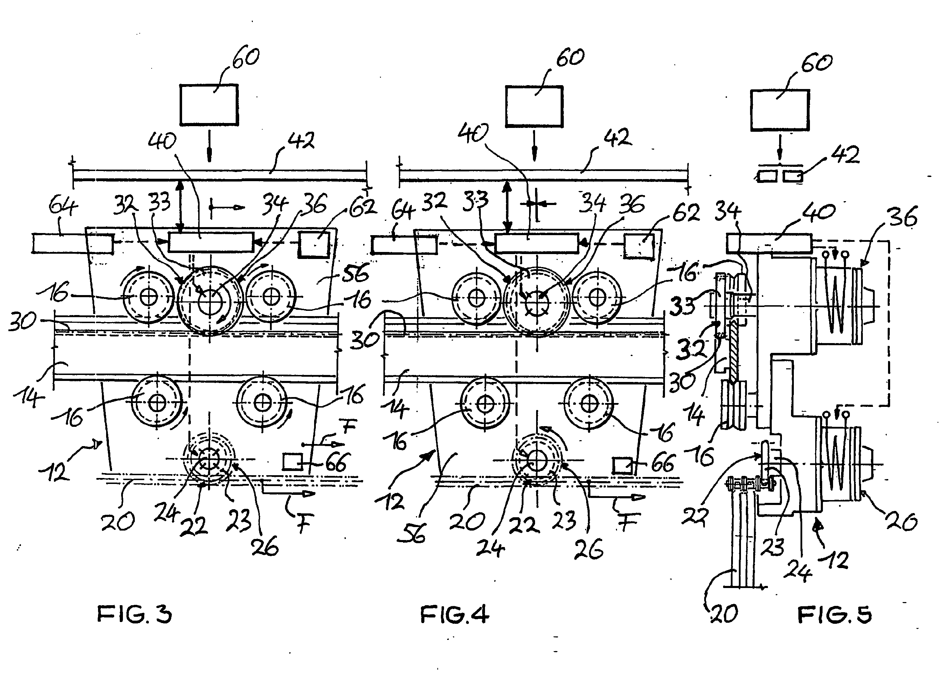

Im Falle der Bewegung der Förderschlitten 12 sind diese an die erste Formschlusseinheit 20 gekoppelt. Beim Stoppen eines Förderschlittens 12 wird diese Kopplung aufgehoben. Die Art und Weise der Kopplung wird nachfolgend anhand der Figuren 3 bis 5 beschrieben. Die Figuren 3 und 4 sind der Übersicht halber durchsichtig gezeichnet.

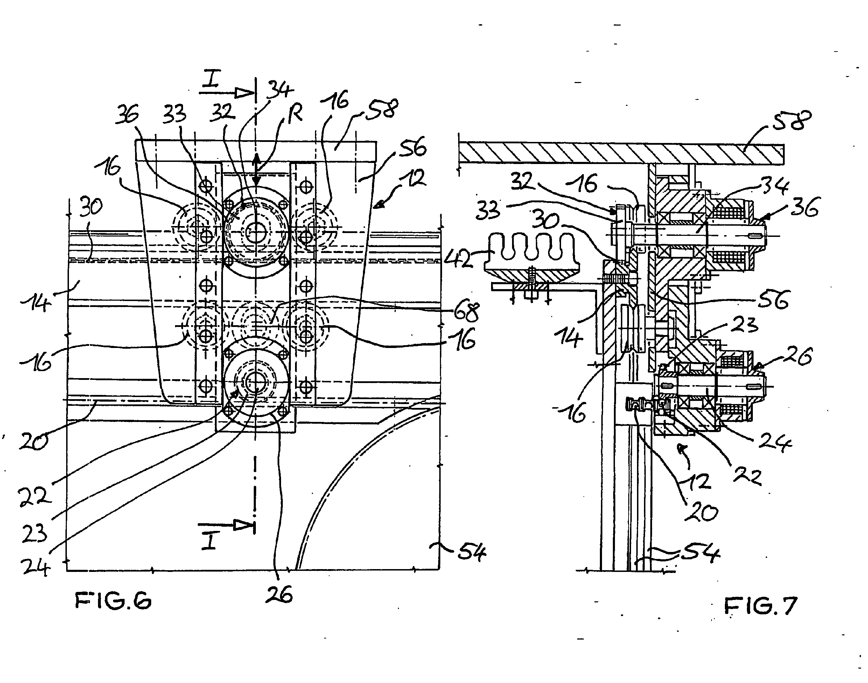

An einer Basiseinheit 56 des Förderschlittens 12 sind insgesamt vier Führungsrollen 16 drehbar gelagert. Die beabstandet angeordneten Führungsrollen 16 liegen paarweise gegenüberliegend an dem Führungsprofil 14 an und weisen umlaufend jeweils eine Nut auf, in die der jeweilige Seitenrand des Führungsprofils 14 eingreift. Im in Fig. 3 und 4 unteren Randbereich der Basiseinheit 56 ist in dem Bereich zwischen den Führungsrollen 16 eine erste Gegenformschlusseinheit 22 vorhanden, die ein Ritzel 23 und eine erste Drehwelle 24 aufweist, die drehbar an der Basiseinheit 56 gelagert ist. Auf der ersten Drehwelle 24 ist auf der gegenüberliegenden Seite der Basiseinheit 56 eine erste Kopplungseinheit 26 (Fig. 5) vorhanden, die als elektromagnetische Kupplungseinheit ausgebildet ist.

Das Ritzel 23 greift in die Kette der ersten Formschlusseinheit 20 ein.

Auf der der ersten Formschlusseinheit 20 gegenüberliegenden Seite des Führungsprofils 14 ist eine zweite Gegenformschlusseinheit 32 vorhanden, die ein zweites Ritzel 33 und eine zweite Drehwelle 34 aufweist, die drehbar an der Basiseinheit 56 gelagert ist. Auf der gegenüberliegenden Seite der Basiseinheit 56 ist auf der zweiten Drehwelle 34 eine zweite Kopplungseinheit 36 (Fig. 5) angeordnet, die als elektromagnetische Bremseinheit ausgebildet ist. Das zweite Ritzel 33 greift hierbei in die Zahnstange der zweiten Formschlusseinheit 30 ein.

Weiterhin ist in den Figuren 3 bis 5 schematisch eine Steuereinrichtung 40 dargestellt, mittels derer der Schaltzustand der ersten und zweiten Kopplungseinheit 26, 36 gesteuert werden kann. Die Stromversorgung des Förderschlittens 12 erfolgt über eine in den Figuren 3 bis 5 schematisch dargestellte Stromschiene 42 und einen entsprechend ausgebildeten Schleifkontakt am Förderschlitten 12. Über die Stromschiene 42 wird die Steuereinrichtung 40 mit Strom versorgt und angesteuert, wobei in einem Ausführungsbeispiel die Steuereinrichtung 40 als Relais ausgebildet ist.

Schließlich ist in den Figuren 3 bis 5 weiterhin stark schematisiert eine externe Steuereinrichtung 60 dargestellt, mittels derer die Möglichkeit besteht, die Steuereinrichtung 40 jedes Förderschlittens 12 einzeln anzusprechen. Hierzu kann beispielsweise die bekannte Bus-Technik eingesetzt werden, wobei entsprechende Elektronik auf dem Förderschlitten 12 in Form der Steuereinrichtung 40 mitfährt und die Stromschiene 42 entsprechende Bus-Anschlüsse aufweist.

Es ist auch möglich, in einer weiteren Ausführungsvariante, dass die Steuereinrichtung 40 über Funk von der externen Steuereinrichtung 60 ansprechbar ist.

Weiterhin ist an der Basiseinheit 56 im rechten oberen Eckbereich ein erster Initiator 62 dargestellt, der mit der Steuereinrichtung 40 in Kommunikationsverbindung steht. Schließlich ist noch im gegenüberliegenden linken oberen Randbereich eine Steuerfahne 64 an dem Förderschlitten 12 vorhanden, die einen Überstand über die Basiseinheit 56 in Richtung des nachfolgenden Förderschlittens 12 aufweist.

Im rechten unteren vorderen Eckbereich der Basiseinheit 56 ist weiterhin ein zweiter Initiator 66 schematisch dargestellt.

Das Fördersystem ist geeignet, im akkumulierenden Betrieb auch als Vertikalförderer eingesetzt zu werden.

In Fig. 3 ist der Förderschlitten 12 im Förderzustand dargestellt. Hierbei hat die Steuereinrichtung 40 veranlasst, dass die zweite Kopplungseinheit 36 die zweite Drehwelle 34 in einen Freilauf schaltet, so dass das zweite Ritzel 33 frei drehen kann. Gleichzeitig steht das erste Ritzel 23 mit der sich in Förderrichtung F bewegenden ersten Formschlusseinheit 20 in Eingriff und die Steuereinrichtung 40 hat veranlasst, dass das erste Kopplungselement 26 in den Kupplungszustand geschaltet ist, das heißt die Förderbewegung F der Kette wird über das erste Ritzel 23, die erste Drehwelle 24 und die erste Kopplungseinheit 26 auf den Förderschlitten 12 übertragen. Während der Förderbewegung dreht somit das Ritzel 33 der Zahnstange 30 durch, während hingegen das Ritzel 23 der Transportkette 20 starr ist.

Läuft nun ein Förderschlitten 12 auf einen davor befindlichen Förderschlitten auf, so kommt die Steuerfahne 64 des vorderen Förderschlittens 12 mit dem ersten Initiator 62 in Kontakt, der daraufhin sein Signal an die Steuereinrichtung 40 abgibt, die daraufhin veranlasst, dass die erste Kopplungseinheit 26 die erste Gegenformschlusseinheit 22 (erstes Ritzel 23 und erste Drehwelle 24) in den Freilauf schaltet. Gleichzeitig wird die zweite Kopplungseinheit 36 beaufschlagt dahingehend, dass die zweite Gegenformschlusseinheit 32 (zweites Ritzel 33 und zweite Drehwelle 34) fixiert wird. In diesem Stoppzustand dreht somit das erste Ritzel 23 der ersten Formschlusseinheit 20 (Kette) durch und das zweite Ritzel 33 der zweiten Formschlusseinheit 30 (Zahnstange) ist starr. Dadurch ist eine sichere Stopp-Positionierung des Förderschlittens gegeben, so dass das System problemlos auch als Vertikalförderer mit akkumulierender Wirkung eingesetzt werden kann.

Durch die formschlüssige Verbindung zwischen zweitem Ritzel 33 und der zweiten Gegenformschlusseinheit 32 (Zahnstange) kann der Förderschlitten in vertikaler Lage sicher gehalten werden. Ein Friktionselement wie im Stand der Technik ist nicht erforderlich. Ein Staudruck kann durch entsprechende Einstellung der Steuerfahne 64 des vorausfahrenden Schlittens vollständig vermieden werden. Durch den zweiten Initiator 66 und eine zusätzliche Spur der Stromschiene 42 kann an Stoppstellen sogar auf eine Vereinzelung der Förderschlitten 12 verzichtet werden. Hierzu sind an der Ent- oder Beladestelle in den Figuren 3 bis 5 nicht näher dargestellte Stopp-Nocken vorhanden, die den zweiten Initiator 66 schalten, woraufhin der Förderschlitten 12 in Stopp-Position gehalten wird unter entsprechender Schaltung der ersten und zweiten Kopplungseinheit 26, 36. Die Freigabe des Förderschlittens kann steuerungstechnisch durch eine UND-Verknüpfung von dem zweiten Initiator 66 und der Bestromung der Stromschiene 42 erfolgen.

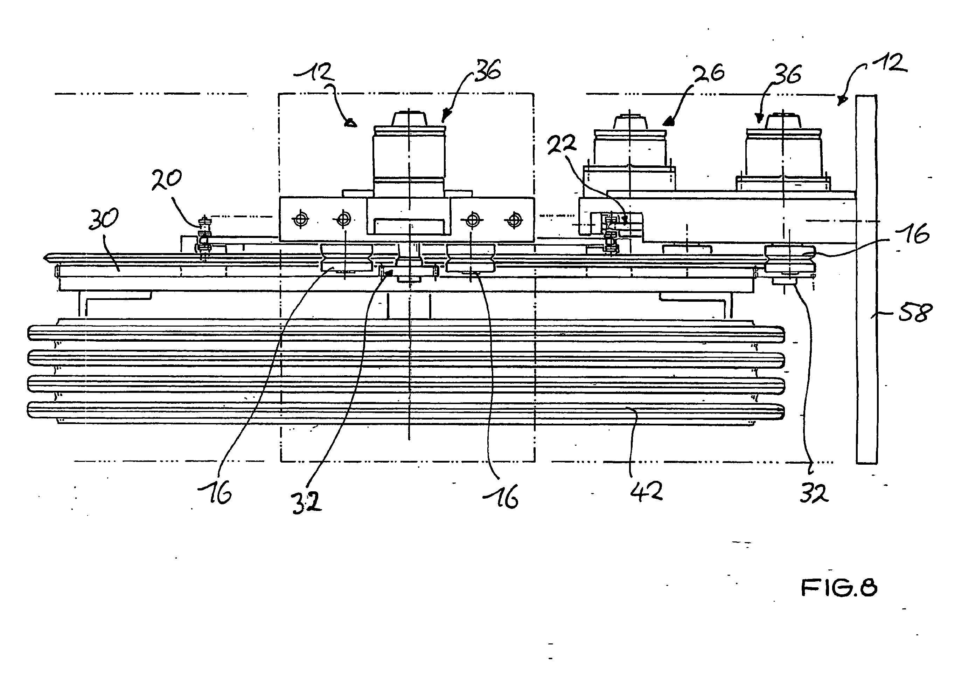

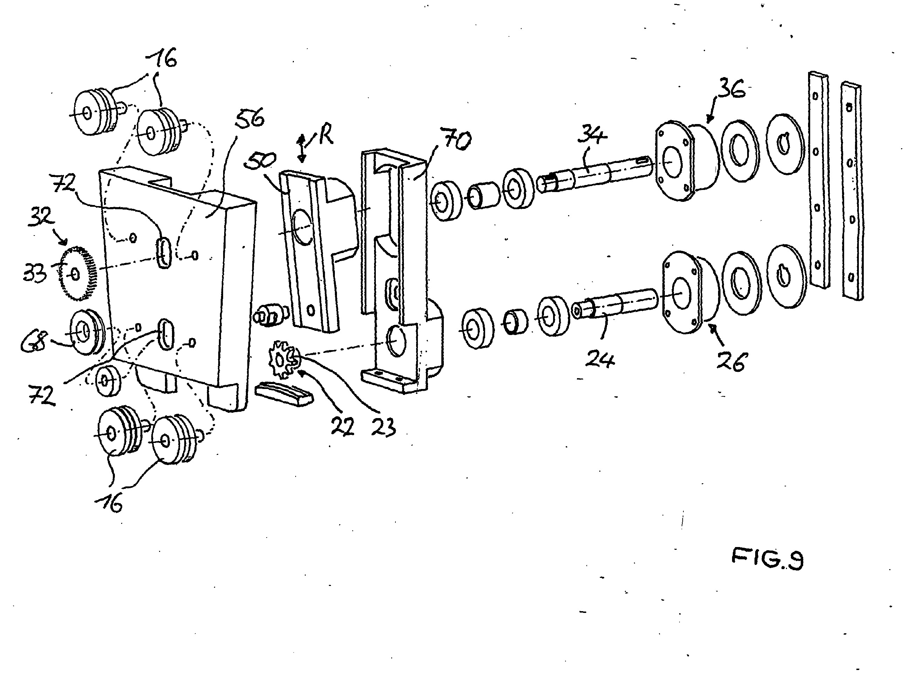

Eine konstruktive Ausgestaltung des Fördersystems 10 ist in den Figuren 6 bis 9 näher dargestellt. Vom Prinzip her besitzt das Fördersystem 10 denselben Aufbau gemäß der schematischen Darstellungen in den Figuren 3 bis 5. Ergänzend ist in den Figuren 6 bis 8 noch der Anschluss einer Palette 58 dargestellt.

Auf die Darstellung der Steuereinrichtung 40, des ersten und zweiten Initiators 62, 66 ist in den Figuren 6 bis 9 verzichtet worden. Wie aus Fig. 6 ersichtlich, ist bei dem Förderschlitten 12 ergänzend noch eine Andruckrolle 68 vorhanden, die auf der dem zweiten Ritzel 33 gegenüberliegenden Seite des Führungsprofils 14 drehbar angeordnet ist und für einen permanenten Andruck der zweiten Formschlusseinheit 30 (Zahnstange) an das zweite Ritzel 33 sorgt.

Wie insbesondere aus der Explosionsdarstellung in Fig. 9 zu erkennen ist, ist die zweite Gegenformschlusseinheit 32 mit dem zweiten Ritzel 33 und der zweiten Drehwelle 34 und die Andruckrolle 68 verschieblich an der Basiseinheit 56 gelagert, wobei eine Verschiebung (R) in Richtung quer zur Förderrichtung F möglich ist. Um diese Verschiebebewegung R zu ermöglichen, besitzt die Basiseinheit 56 im Bereich der Drehachsen der zweiten Drehwelle 34 beziehungsweise der Andruckrolle 68 jeweils eine Langlochausnehmung 72, durch die die Drehachsen geführt sind. Die Drehachsen selbst'sind an einer rückseitig an der Basiseinheit 56 angeordneten Lagereinheit 50 drehbar gelagert, die wiederum in einer weiteren Führungseinheit 70 verschieblich gelagert ist, wobei die Führungseinheit 70 wiederum mit der Basiseinheit 56 verbunden ist. Durch die Verschieblichkeit der Lagerung der zweiten Gegenformschlusseinheit 32 wird vermieden, dass es im Bereich der Krümmung des Führungsprof ils 14 aufgrund der sich ändernden Geometrie zu Zwangskräften kommt, die einen erhöhten Verschleiß bewirken könnten.

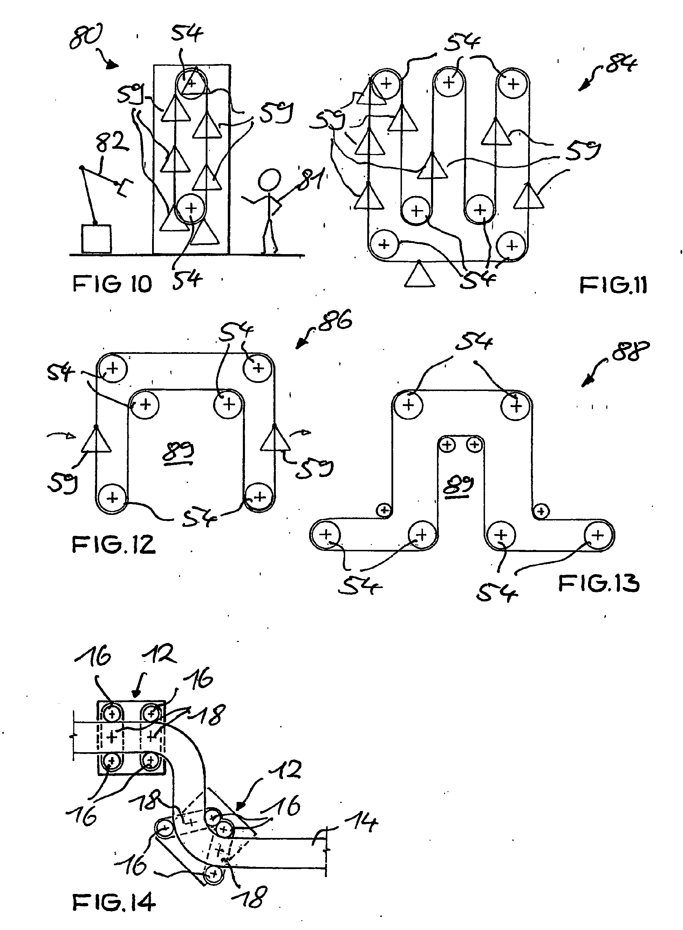

In den Figuren 10 bis 13 sind unterschiedliche Varianten von Vertikal-Fördersystemen angegeben, die sich im Verlauf des Förderweges unterscheiden.

Gemäß Fig. 10 ist ein umlaufendes Vertikal-Fördersystem 80 dargestellt, bei dem an einer Stelle über eine Bedienperson 81 entladen wird, die Förderschlitten 12 mit Gondeln nach oben geführt werden, dann nach unten geführt werden, um auf der gegenüberliegenden Seite durch einen Roboter 82 beladen zu werden.

Das in Fig. 11 schematisch dargestellte umlaufende Vertikal-Fördersystem 84 weist in seinem oberen Bereich einen mäandrierenden Förderwegsverlauf auf und ist geeignet, als Fördersystem mit mehreren Be- und Entladestationen eingesetzt zu werden. Dieses System weist eine hohe Pufferkapazität auf.

Bei den Fördersystemen 86, 88 gemäß den Figuren 12 beziehungsweise 13 ist eine U-förmige Hin- und U-förmige Rückführung des Bandes schematisch dargestellt, so dass innerhalb des Fördersystems 86, 88 ein Durchgang 89 für Personen oder Fahrzeuge wie Gabelstapler oder dergleichen ,geschaffen werden kann. Das Fördersystem 88 gemäß Fig. 13 , besitzt darüber hinaus noch seitliche horizontale Förderstrecken, um zum Beispiel ein gut zugängliche Be-/Entladung von oben zu ermöglichen.

Um eine möglichst zwängungsfreie Führung der Förderschlitten bei S-förmigen Förderwegsverläufen zu gewährleisten, sind die jeweils paarmäßig gegenüberliegenden Führungsrollen 16 auf einem Drehschemel 18 gemäß der schematischen Darstellung in Fig. 14 gelagert.

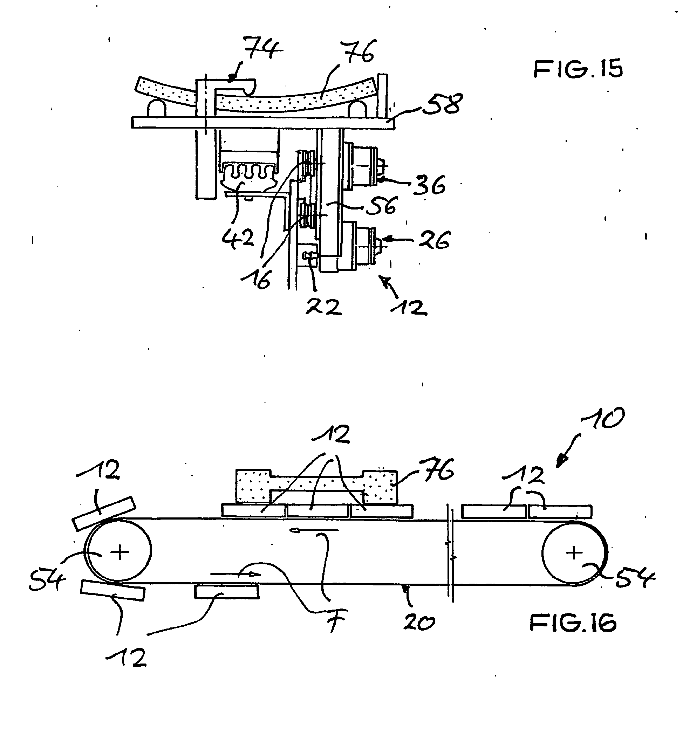

Da für jeden Förderschlitten 12 ein Stromanschluss zur Verfügung steht, ist es auch möglich, auf der Palette 58 gemäß der schematischen Darstellung in Fig. 15 beispielsweise eine Fixiereinheit 74 für ein eingelegtes Produkt 76 vorzusehen.. Es ist prinzipiell auch möglich, auf der Palette Bearbeitungseinheiten vorzusehen.

Gemäß der Darstellung in Fig. 16 ist es mit dem erfindungsgemäßen Fördersystem ebenfalls möglich, mehrere Förderschlitten 12 zu einer Palette zusammenzufassen. Bei der Darstellung in Fig. 16 sind hierbei drei Paletten mit zugehörigen Förderschlitten 12 zu einem Zug zusammengefasst. Die ersten Gegenformschlusseinheiten 22 der in Fig. 16 linken und mittleren Förderschlitten 12 sind in Freilauf geschaltet. Lediglich die erste Gegenformschlusseinheit des in Fig. 16 rechten Förderschlittens befindet sich im Kupplungszustand, so dass die beiden davor liegenden Förderschlitten durch den rechten Förderschlitten 12 geschoben werden. Dadurch ist es möglich, größere Werkstücke zu transportieren. Je nach Steuerung kann an weiteren Positionen innerhalb des Förderweges wieder eine Vereinzelung der einzelnen Förderschlitten 12 vorgenommen werden.

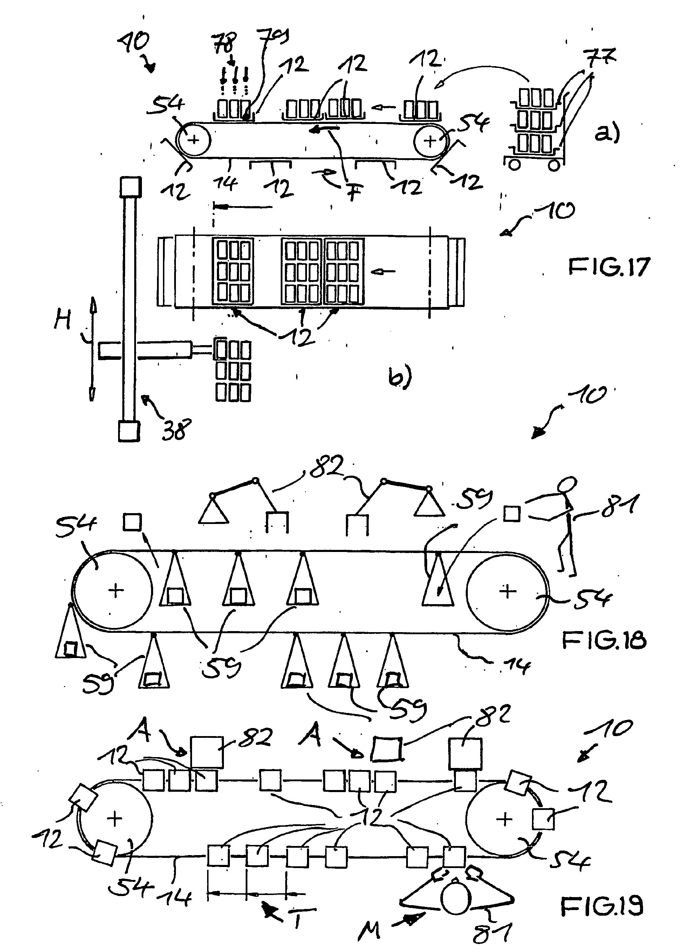

Auf allen Förderschlitten 12/Paletten kann der Empfänger 79 (Fig. 17) einer Lichtschranke montiert werden. An einer vorgebbaren Stoppstelle wird ein Senderteil 78 der Lichtschranke installiert. Damit können die Förderschlitten 12/ Paletten gestoppt werden, wenn die Lichtschranke durchschaltet. Am stationären Teil, das heißt im Senderteil 78 der'Lichtschranke wird zur Weiterfahrt des Förderschlittens 12/der Palette einfach die Spannung weggenommen. Damit fährt der Förderschlitten 12/die Palette weiter. Dies stellt eine kostengünstige Lösung zur Steuerung dar.

In Fig. 17 ist schematisch ein Fördersystem 10 dargestellt, bei dem Werkstückträger 77 mit mehreren Werkstücken in die Gondeln des Fördersystems 10, eingestellt werden. Da der Werkstückträger 77 mehrere Werkstücke enthält, entfällt das Umpacken von Werkstücken. Das Einstellen innerbetrieblicher Werkstückträger kann auch automatisch über ein Be-/Entladegerät erfolgen. An den Stoppstellen zum Be-/Entladen der Werkstückträger 77 befinden sich im dargestellten Ausführungsbeispiel drei Lichtschranken-Senderteile 78. An den Gondeln befindet sich jeweils ein Lichtschranken-Empfänger 79. So können an den Stoppstellen zum Be- /Entladen der Werkstückträger 77 auf einfache Weise mehrere Positionen angefahren werden. Dies bringt den Vorteil mit sich, dass zur Abarbeitung der einzelnen Werkstücke mittels einer Handling-Vorrichtung 38 eine Fläche abgearbeitet werden kann, wobei die Handling-Vorrichtung 38 lediglich eine Verschiebbarkeit um eine horizontale Achse H aufweisen muss.

In Fig. 18 ist schematisch dargestellt, dass es bei dem erfindungsgemäße Fördersystem 10 möglich ist, am gleichen Band die Zuführung von Teilen in einen Prozess und die Rückführung von bearbeiteten Teilen an die Aufgabestelle vorzunehmen. Dies bringt unter anderem den Vorteil mit sich, dass der Bediener 81 an der gleichen Position be-/entlädt.

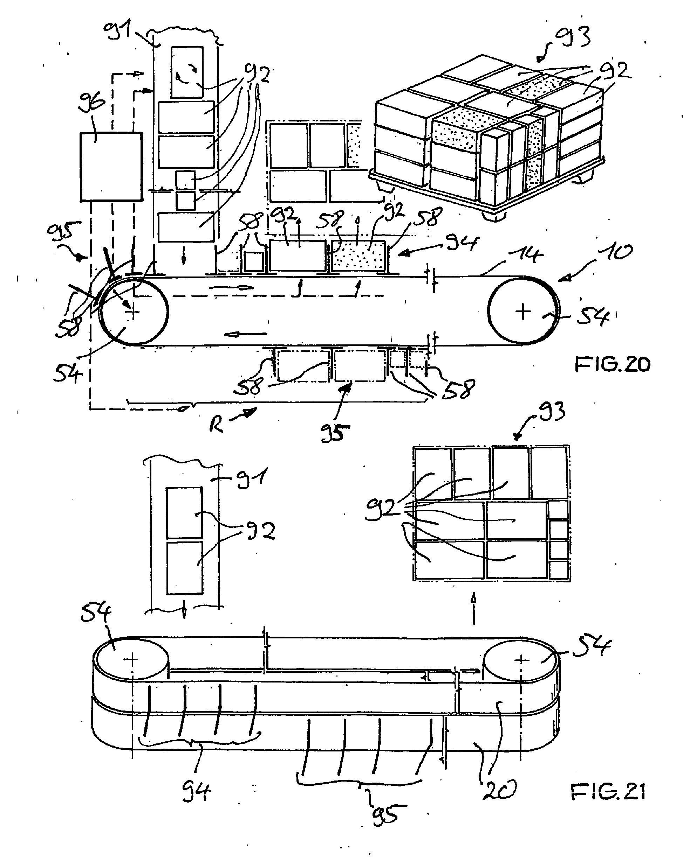

In Fig. 19 ist schematisch in einer Draufsicht dargestellt, wie das erfindungsgemäße Fördersystem 10 innerhalb eines Montagesystems eingesetzt werden kann. Dabei gibt es Bandbereiche, in denen die Förderschlitten/Paletten getaktet T bewegt werden, in denen die Förderschlitten/Paletten aufgepuffert beziehungsweise akkumulierend A bewegt werden oder bei denen die Förderschlitten/Paletten manuell M von der Bedienperson 81 verschoben werden können.

Dadurch, dass die einzelnen Förderschlitten/Paletten einzeln gezielt angesprochen werden können, ist es beispielsweise möglich, das erfindungsgemäße Fördersystem als Sortiersystem auszubilden. Hierzu wird auf dem Förderschlitten/der Palette eine Einheit montiert, die ermöglicht, dass benachbarte Förderschlitten/Paletten ein Aufnahmefach bilden. Durch das Ansprechen der einzelnen Förderschlitten/Paletten kann der Abstand der Fächer verändert werden. Damit lassen sich verschiedenste Packbilder realisieren, auch mit unterschiedlich großen Produkten.

In den Figuren 20 und 21 ist schematisch die Ausbildung einer Palettieranlage 90 unter Einsatz des erfindungsgemäßen Fördersystems 10 dargestellt. Dem Förderband des Fördersystems 10 werden über ein Einlaufband 91 Pakete 92 taktmäßig zugeführt. Eine Steuereinrichtung 96 erkennt die Größe des jeweils zur Aufnahme anstehenden Pakets 92.

In dem Fördersystem 10 wird ein erster Zug 94 und ein zweiter Zug 95 aus hintereinander angeordneten Paletten 58, die aufgrund ihres Abstands Aufnahmefächer bilden, eingesetzt. Jeder Zug 94, 95 ist einer getrennt antreibbaren ersten Formschlusseinheit 20 (Kette) zugeordnet.

An der Beladestelle im Übergangspunkt zwischen Einlaufband 91 und Fördersystem 10 wird ein Zug 94, 95 entsprechend dem Takt des Einlaufbandes 91 befüllt. Sobald die Palettenbreite des Zuges 94, 95 erreicht ist, wird der Zug in Fig. 20 nach rechts verschoben, gestoppt und die Pakete 92 werden auf eine Packpalette 93 geschoben. Während dieses Vorgangs wird der zweite Zug 95 an der Beladestelle beladen, wobei im Bereich der Rückführstrecke R eine Abstandsmessung der einzelnen Paletten durchgeführt wird und diese entsprechend der Abmessung der jeweils nachfolgend aufzunehmenden Pakete 92 eingestellt wird. Die Information über die Größe des nachfolgend aufzunehmenden Pakete wird über die Steuereinrichtung 96 geliefert, das heißt der zweite Zug 95 steht dann an der Beladestelle an, wobei die einzelnen Paletten entsprechend der Größe des jeweils aufzunehmenden Pakets 92 angeordnet sind, und geht in den getakteten Aufgabebetrieb über. Die Zeit, die zur Verfügung steht, einen unbeladenen Zug wieder der Aufgabestelle zuzuführen, entspricht der Zeit, innerhalb derer der weitere Zugang an der Aufgabestelle beladen wird, das heißt die Bewegung des Zuges außerhalb der Aufgabestation erfolgt mit höherer Geschwindigkeit als die Taktbewegung.

In Fig. 21 sind die die Fächer für die Pakete 92 bildenden Paletten 58 stark schematisiert dargestellt.

## Patentansprüche

1. Fördersystem (10) für Werkstücke oder Gegenstände mit
- einem Führungsprofil (14),
- Förderschlitten (12), die entlang des Führungsprofils (14) bewegbar sind und jeweils eine Aufnahmeeinheit, insbesondere Palette (58) oder Gondel, für zumindest ein Werkstück oder zumindest einen Gegenstand aufweisen,
- einer im Wesentlichen parallel zum Führungsprofil (14) mittels eines Antriebsaggregats (52) bewegbaren ersten Formschlusseinheit (20) und
- einer mit der ersten Formschlusseinheit (20) koppelbaren an jedem Förderschlitten, (12) jeweils gelagerten ersten Gegenformschlusseinheit (22),
**gekennzeichnet durch**
- eine erste Kopplungseinheit (26), mittels derer die Koppelung der ersten Formschlusseinheit (20) mit der jeweiligen ersten Gegenformschlusseinheit (22) wahlweise ein- beziehungsweise ausgeschaltet werden kann,
- eine im Wesentlichen parallel zum Führungsprofil (14) verlaufende stationäre zweite Formschlusseinheit (30),
- eine mit der zweiten Formschlusseinheit (30) koppelbare an jedem Förderschlitten (12) jeweils gelagerte zweite Gegenformschlusseinheit (32) und
- eine zweite Kopplungseinheit (36), mittels derer die Koppelung der zweiten Formschlusseinheit (30) mit der jeweiligen zweiten Gegenformschlusseinheit (32) wahlweise ein- beziehungsweise ausgeschaltet werden kann.

2. Fördersystem nach Anspruch 1,
- **dadurch gekennzeichnet, dass**
jeder Förderschlitten (12) eine ansteuerbare Steuereinrichtung (40) aufweist, mittels derer die erste und zweite Kopplungseinheit (26; 36) angesteuert werden kann.

3. Fördersystem nach Anspruch 1 oder 2,
- **dadurch gekennzeichnet, dass**
zumindest einer oder jeder Förderschlitten eine manuell betätigbare Schalteinheit zum Steuern des Schaltzustandes der ersten und zweiten Kopplungseinheit aufweist.

4. Fördersystem nach Anspruch 2 oder 3,
- **dadurch gekennzeichnet, dass**
die Stromversorgung der Förderschlitten (12) beziehungsweise der Steuereinrichtung (40) und der ersten und zweiten Kopplungseinheit (26; 36) über eine parallel zum Führungsprofil (14) verlaufende oder in dem Führungsprofil integrierte, abtastbare Stromschiene (42) erfolgt.

5. Fördersystem nach Anspruch 2 oder 3,
- **dadurch gekennzeichnet, dass**
die Stromversorgung der Förderschlitten (12) beziehungsweise der Steuereinrichtung (40) und der ersten und zweiten Kopplungseinheit (26 ; 36) über eine an dem Förderschlitten (14) angeordnete Energiespeichereinheit, insbesondere Akkumulator, erfolgt.

6. Fördersystem nach einem oder mehreren der Ansprüche 2 bis 5,
- **dadurch gekennzeichnet, dass**
die Steuereinrichtung ein Relais oder eine ansteuerbare elektronische Schaltung, insbesondere programmierbaren Mikrochip, aufweist.

7. Fördersystem nach einem oder mehreren der Ansprüche 2 bis 6,
- **dadurch gekennzeichnet, dass**
zumindest ein oder jeder Förderschlitten (12) zumindest eine Signalempfangseinheit, insbesondere Initiator (62, 66) oder Lichtschranken-Empfangsteil (79) aufweist, die von zumindest einer weiteren oder externen Signalgebereinheit, insbesondere Steuerfahne (64) oder Stopp-Nocken oder Lichtschranken-Senderteil (78) , beaufschlagbar ist und die die Steuereinrichtung (40) entsprechend dem empfangenen Signal beaufschlagt, woraufhin die Steuereinrichtung (40) die erste und/oder zweite Kopplungseinheit (26; 36) schaltet.

8. Fördersystem nach einem oder mehreren der vorstehenden Ansprüche,
- **dadurch gekennzeichnet, dass**
die erste und/oder zweite Gegenformschlusseinheit (22;32) ein Zahnrad beziehungsweise Ritzel aufweist.

9. Fördersystem nach Anspruch 8,
- **dadurch gekennzeichnet, dass**
die erste Formschlusseinheit (20) als umlaufende Kette, insbesondere Triplexkette, ausgebildet ist.

10. Fördersystem nach Anspruch 8 oder 9,
- **dadurch gekennzeichnet, dass**
die zweite Formschlusseinheit (30) als Zahnstange oder Kette ausgebildet ist.

11. Fördersystem nach Anspruch 10,
- **dadurch gekennzeichnet, dass**
die zweite Formschlusseinheit (30) an dem Führungsprofil (14) gelagert angeordnet ist.

12. Fördersystem nach einem oder mehreren der vorstehenden Ansprüche,
- **dadurch gekennzeichnet, dass**
- die erste Gegenformschlusseinheit (22) mit der ersten Formschlusseinheit (20) in Eingriff steht und eine am Förderschlitten (12) drehbar gelagerte erste Drehwelle (24) aufweist,
- die erste Kopplungseinheit (26) als Kupplungs- oder Bremseinheit, insbesondere elektromagnetische Kupplungs- oder Bremseinheit, ausgebildet ist, die die erste Drehwelle (24) mit dem Förderschlitten (12) koppelt oder in einen Freilauf schaltet.

13. Fördersystem nach einem oder mehreren der vorstehenden Ansprüche,
- **dadurch gekennzeichnet, dass**
- die zweite Gegenformschlusseinheit (32) mit der zweiten Formschlusseinheit (30) in Eingriff steht und eine am Förderschlitten (12) drehbar gelagerte zweite Drehwelle (34) aufweist,
- die zweite Kopplungseinheit (36) als Kupplungs- oder Bremseinheit, insbesondere elektromagnetische Kupplungs- oder Bremseinheit, ausgebildet ist, die die zweite Drehwelle (34) mit dem Förderschlitten (12) koppelt beziehungsweise fixiert oder in einen Freilauf schaltet.

14. Fördersystem nach Anspruch 12 oder 13,
- **dadurch gekennzeichnet, dass**
die erste und zweite Kopplungseinheit (26; 36) auf der ersten beziehungsweise zweiten Drehwelle (24; 34) angeordnet sind.

15. Fördersystem nach einem oder mehreren der vorstehenden Ansprüche,
- **dadurch gekennzeichnet, dass**
die erste und/oder zweite Gegenformschlusseinheit (22; 32) über eine Lagereinheit (50) an dem Förderschlitten (12) drehbar gelagert sind, die in Richtung (R) quer zur Förderrichtung (F) verschieblich am Förderschlitten (12) gelagert ist.

16. Fördersystem nach Anspruch 2,
- **dadurch gekennzeichnet, dass**
eine Datenbusleitung vorhanden ist, auf die die Steuereinrichtung (40) zugreift.

17. Fördersystem nach Anspruch 2 ,
- **dadurch gekennzeichnet, dass**
die Steuereinrichtung (40) über eine externe weitere Steuereinrichtung (60) ansteuerbar ist.

18. Fördersystem nach Anspruch 7,
- **dadurch gekennzeichnet, dass**
die zumindest eine Signalempfangseinheit und die zumindest eine Signalgebereinheit als Lichtschrankeneinheit mit Empfänger und Sender ausgebildet sind.

19. Fördersystem nach Anspruch 7,
- **dadurch gekennzeichnet, dass**
für jeden Förderschlitten (12) eine Abstandserfassungseinheit zum Erfassen des Abstandes eines nachfolgenden Förderschlittens (12) von einem vorauslaufenden Förderschlitten (12) vorhanden ist, die bei Unterschreiten/ Überschreiten eines vorgegebenen Minimalabstandes ein Signal an die Steuereinrichtung (40) abgibt, die daraufhin die Förderbewegung des nachfolgenden Förderschlittens unterbricht beziehungsweise veranlasst.

20. Fördersystem nach Anspruch 7,
- **dadurch gekennzeichnet, dass**
eine Positionserfassungseinheit zum Erfassen der Position von Förderschlitten entlang des Förderweges vorhanden ist, die bei Erreichen einer vorgegebenen Position ein Signal an die Steuereinrichtung des jeweiligen Förderschlittens abgibt, die die Förderbewegung des Förderschlittens daraufhin unterbricht.

21. Fördersystem nach Anspruch 19,
- **dadurch gekennzeichnet, dass**
die Abstandserfassungseinheit **dadurch** umgesetzt wird, dass jeder Förderschlitten einen ersten Initiator (44) und eine Steuerfahne (46) aufweist, wobei die Steuerfahne (46) bei Erreichen des Minimalabstandes benachbarter Förderschlitten den Initiator (44) des nachfolgenden Förderschlittens schaltet.

22. Fördersystem nach einem oder mehreren der vorstehenden Ansprüche,
- **dadurch gekennzeichnet, dass**
am Förderschlitten (12) mit dem Führungsprofil (14) korrespondierende Führungsmittel oder Führungselemente, insbesondere Führungsrollen (16), vorhanden sind.

23. Fördersystem nach Anspruch 22,
- **dadurch gekennzeichnet, dass**
gegenüberliegend am Führungsprofil (14) angeordnete Führungsmittel vorhanden sind, die, insbesondere paarweise, auf einen am Förderschlitten (12) drehbar gelagerten Drehschemel (18) angeordnet sind.

24. Fördersystem nach einem oder mehreren der vorstehenden Ansprüche,
- **dadurch gekennzeichnet, dass**
die erste Formschlusseinheit (20) als über ein Antriebsaggregat (52) antreibbare umlaufende Einheit ausgebildet ist.

25. Fördersystem nach Anspruch 24,
- **dadurch gekennzeichnet, dass**
das Antriebsaggregat (52) eine Rutschkupplung aufweist.

26. Fördersystem nach Anspruch 24 oder 25,
- **dadurch gekennzeichnet, dass**
das Antriebsaggregat (52) ansteuerbar ausgebildet ist, zum wahlweisen Erzeugen einer taktförmigen, beschleunigten oder verzögerten Förderbewegung.

27. Fördersystem nach einem oder mehreren der vorstehenden Ansprüche,
- **dadurch gekennzeichnet, dass**
die Förderrichtung (F) zumindest bereichsweise vertikal verläuft.

28. Fördersystem nach Anspruch 27,
- **dadurch gekennzeichnet, dass**,
das System (10) zumindest bereichsweise einen nach oben und anschließend nach unten weisenden Verlauf, der insbesondere einen Durchgang bildet, aufweist.

29. Fördersystem nach Anspruch 28,
- **dadurch gekennzeichnet, dass**
der nach oben und unten weisende Verlauf im Wesentlichen U- oder V-förmig ausgebildet ist und eine Durchgangsöffnung für Personen, Fahrzeuge oder dergleichen bietet.

30. Fördersystem nach einem oder mehreren der vorstehenden Ansprüche,
- **dadurch gekennzeichnet, dass**
das System (10) als ein in einer Draufsicht gesehen umlaufendes Montageband ausgebildet ist.

31. Fördersystem nach einem oder mehreren der vorstehenden Ansprüche,
- **dadurch gekennzeichnet, dass**
die Förderrichtung (F) zumindest bereichsweise mäanderförmig in der Vertikalen verläuft.

32. Fördersystem nach Anspruch 17,
- **dadurch gekennzeichnet, dass**
die externe Steuereinrichtung (60) jeden Förderschlitten (12) über die jeweilige Steuereinrichtung (40) einzeln ansprechbar ausgebildet ist.

33. Fördersystem nach einem oder mehreren der vorstehenden Ansprüche,
- **dadurch gekennzeichnet, dass**
das System im Rahmen eines Sortiersystems eingesetzt wird.

34. Fördersystem nach einem oder mehreren der vorstehenden Ansprüche,
- **dadurch gekennzeichnet, dass**
das System im Rahmen eines Palettiersystems eingesetzt wird.

35. Fördersystem nach einem oder mehreren der vorstehenden Ansprüche,
- **dadurch gekennzeichnet, dass**
das System so ausgebildet ist, dass die Förderschlitten bereichsweise taktend und/oder bereichsweise akkumulierend und/oder bereichsweise manuell bewegbar sind.

36. Fördersystem nach einem oder mehreren der vorstehenden Ansprüche,
- **dadurch gekennzeichnet, dass**
zumindest an einem Förderschlitten eine Fixiereinheit und/oder Bearbeitungseinheit zum Fixieren und/oder Bearbeiten des jeweiligen Werkstückes oder Gegenstandes vorhanden ist.

37. Fördersystem nach einem oder mehreren der vorstehenden Ansprüche,
- **dadurch gekennzeichnet dass**
im Bewegungszustand des Förderschlittens (12) die erste Kopplungseinheit (26) die erste Gegenformschlusseinheit (22) in den Kopplungszustand mit der ersten Formschlusseinheit (20) und die zweite Kopplungseinheit (36) die zweite Gegenformschlusseinheit (32) in den Freilauf schaltet und im Stoppzustand des Förderschlittens (12) die erste Kopplungseinheit (26) die erste Gegenformschlusseinheit (22) in den Freilauf schaltet und die zweite Kopplungseinheit (36) in den Kopplungszustand der zweiten Gegenformschlusseinheit (32) mit der zweiten Formschlusseinheit (30) schaltet beziehungsweise die zweite Gegenformschlusseinheit.(32) fixiert.

38. Fördersystem nach einem oder mehreren der Ansprüche 1 bis 36,
- **dadurch gekennzeichnet, dass**
bei manueller Bewegung des Förderschlittens die erste und zweite Gegenformschlusseinheit in den Freilauf geschaltet sind.

## Claims

1. A conveying system (10) for workpieces or objects, comprising
- a guide profile (14),
- conveying carriages (12) which can be moved along the guide profile (14) and in each case have a holding unit, in particular a pallet (58) or gondola, for at least one workpiece or at least one object,
- a first form-fitting unit (20) which can be moved substantially parallel to the guide profile (14) by means of drive assembly (52),
- and a first mating form-fitting unit (22) which is respectively mounted on each conveying carriage (12) and can be coupled to the first form-fitting unit (20),
**characterized by**
- a first coupling unit (26), by means of which the coupling of the first form-fitting unit (20) to the respective first mating form-fitting unit (22) can optionally be engaged and disengaged,
- a stationary second form-fitting unit (30) running substantially parallel to the guide profile (14),
- a second mating form-fitting unit (32) in each case mounted on each conveying carriage (12) such that it can be coupled to the second form-fitting unit (30) ,
- and a second coupling unit (36), by means of which the coupling of the second form-fitting unit (30) to the respective second mating form-fitting unit (32) can optionally be engaged and disengaged.

2. The conveying system as claimed in claim 1,
- **characterized in that**
each conveying carriage (12) has a control device (40), by means of which the first and second coupling units (26; 36) can be activated.

3. The conveying system as claimed in claim 1 or 2,
- **characterized in that** at least one or each conveying carriage has a switching unit which can be actuated manually in order to control the switching state of the first and second coupling units.

4. The conveying system as claimed in claim 2 or 3,
- **characterized in that** the power supply of the conveying carriage (12) and of the control device (40) and the first and second coupling units (26; 36) is carried out via a busbar (42) which runs parallel to the guide profile (14) or is integrated into the guide profile and with which contact can be made.

5. The conveying system as claimed in claim 2 or 3,
- **characterized in that** the power supply of the conveying carriage (12) and of the control device (40) and the first and second coupling units (26; 36) is carried out via an energy storage unit, in particular an accumulator, arranged on the conveying carriage (12).

6. The conveying system as claimed in one of claims 2 to 5,
- **characterized in that** the control device has a relay or an electronic circuit that can be activated, in particular a programmable microchip.

7. The conveying system as claimed in one of claims 2 to 6,
- **characterized in that** at least one or each conveying carriage (12) has at least one signal receiving unit, in particular an initiator (62, 66) or light barrier receiving part (79), which can be acted on by at least one external signal generator unit, in particular a control flag (64) or stop cam or light barrier transmitter part (78), and which acts on the control device (40) in accordance with the signal received, whereupon the control device (40) switches the first and/or second coupling unit (26; 36).

8. The conveying system as claimed in one of the preceding claims,
- **characterized in that** the first and/or second mating form-fitting unit (22; 32) has a gear wheel or a pinion.

9. The conveying system as claimed in claim 8,
- **characterized in that** the first form-fitting unit (20) is constructed as a circulating chain, in particular a triplex chain.

10. The conveying system as claimed in claim 8 or 9,
- **characterized in that** the second form-fitting unit (30) is constructed as a rack or rigid chain.

11. The conveying system as claimed in claim 10,
- **characterized in that** the second form-fitting unit (30) is arranged mounted on the guide profile (14) .

12. The conveying system as claimed in one of the preceding claims,
- **characterized in that**
- the first mating form-fitting unit (22) is in engagement with the first form-fitting unit (20) and has a first rotating shaft (24) rotatably mounted on the conveying carriage (12),
- the first coupling unit (26) is constructed as a coupling or braking unit, in particular an electromagnetic clutch or braking unit, which couples the first rotating shaft (24) to the conveying carriage (12) or switches it to freewheel.

13. The conveying system as claimed in one of more of the preceding claims, **characterized in that**
- the second mating form-fitting unit (32) is in engagement with the second form-fitting unit (30) and has a second rotating shaft (34) which is rotatably mounted on the conveying carriage (12),
- the second coupling unit (36) is constructed as a clutch or braking unit, in particular an electromagnetic clutch or braking unit, which couples or fixes the second rotating shaft (34) to the conveying carriage (12) or switches it to freewheel.

14. The conveying system as claimed in claim 12 or 13,
- **characterized in that that** the first and second coupling units (26; 36) are arranged on the first and second rotating shaft (24; 34), respectively.

15. The conveying system as claimed in one or more of the preceding claims,
- **characterized in that** the first and/or second mating form-fitting unit (22; 32) are rotatably mounted on the conveying carriage (12) via a bearing unit (50), which is mounted on the conveying carriage (12) such that it can be displaced in the direction (R) transverse with respect to the conveying direction (F).

16. The conveying system as claimed in claim 2,
- **characterized in that** there is a data bus line, to which the control device (40) makes access.

17. The conveying system as claimed in claim 2,
- **characterized in that** the control device (40) can be activated via an external further control device (60).

18. The conveying system as claimed in claim 7,
- **characterized in that** the at least one signal receiving unit and he at least one signal generating unit are constructed as a light barrier unit with receiver and transmitter.

19. The conveying system as claimed in claim 7,
- **characterized in that**, for each conveying carriage (12), there is a distance registering unit for registering the distance of a following conveying carriage (12) from a preceding conveying carriage (12) which, when the distance exceeds/falls below a predefined minimum, outputs a signal to the control device (40), which then interrupts or arranges for the conveying movement of the following conveying carriage.

20. The conveying system as claimed in claim 7,
- **characterized in that** there is a position registering unit for registering the position of conveying carriages along the conveying path which, when a predefined position is reached, outputs a signal to the control device of the respective conveying carriage, which then interrupts the conveying movement of the conveying carriage.

21. The conveying system as claimed in claim 19,
- **characterized in that** the distance registering unit is implemented **in that** each conveying carriage has a first initiator (44) and a control flag (46), the control flag (46) switching the initiator (44) of the following conveying carriage when the minimum distance between adjacent conveying carriages is reached.

22. The conveying system as claimed in one or more of the preceding claims,
- **characterized in that** on the conveying carriage (12) there are guide means or guide elements, in particular guide rollers (16), corresponding with the guide profile (14).

23. The conveying system as claimed in claim 22,
- **characterized in that** there are guide means arranged opposite on the guide profile (14), which are arranged, in particular in pairs, on a rotating bogie (18) rotatably mounted on the conveying carriage (12).

24. The conveying system as claimed in one or more of the preceding claims,
- **characterized in that** first form-fitting unit (20) is preferably constructed as a circulating unit which can be driven via a drive assembly (52).

25. The conveying system as claimed in claim 24,
- **characterized in that** the drive assembly (52) has a slipping clutch.

26. The conveying system as claimed in claim 24 or 25,
- **characterized in that** the drive assembly (52) is constructed such that it can be activated to optionally produce a cyclic, accelerated or retarded conveying movement.

27. The conveying system as claimed in one or more of the preceding claims,
- **characterized in that** the conveying direction (F) runs vertically, at least in some regions.

28. The conveying system as claimed in claim 27,
- **characterized in that** the system (10) has, at least in some regions, a course which points upward and then downward and which in particular forms a passage.

29. The conveying system as claimed in claim 28,
- **characterized in that** the course pointing upward and downward is constructed substantially in a U-shape or V-shape and offers a passage opening for persons, vehicles or the like.

30. The conveying system as claimed in one or more of the preceding claims,
- **characterized in that** the system (10) is constructed as an assembly belt which circulates as viewed in a plan view.

31. The conveying system as claimed in one or more of the preceding claims,
- **characterized in that** the conveying direction (F) runs in a meandering shape in the vertical, at least in some regions.

32. The conveying system as claimed in claim 17,
- **characterized in that** the external control device (60) is constructed such that it can address each conveying carriage (12) individually via the respective control device (14).

33. The conveying system as claimed in one or more of the preceding claims,
- **characterized in that** the system is used within the context of a sorting system.

34. The conveying system as claimed in one or more of the preceding claims,
- **characterized in that** the system is used within the context of a palleting system.

35. The conveying system as claimed in one or more of the preceding claims,
- **characterized in that** the system is constructed in such a way that the conveying carriages can be moved cyclically in some regions and/or in an accumulating manner in some regions and/or manually in some regions.

36. The conveying system as claimed in one or more of the preceding claims,
- **characterized in that**, on at least one conveying carriage, there is a fixing unit and/or processing unit for fixing and/or processing the respective workpiece or object.

37. The conveying system as claimed in one or more of the preceding claims,
- **characterized in that**, in the state in which the conveying carriage (12) is moving, the first coupling unit (26) switches the first mating form-fitting unit (22) into the coupling state with the first form-fitting unit (20) and the second coupling unit (36) switches the second mating form-fitting unit (32) to freewheel and, in the state in which the conveying carriage (12) is stopped, the first coupling unit (26) switches the first mating form-fitting unit (22) to freewheel and switches the second coupling unit (36) into the coupling state of the second mating form-fitting unit (32) with the second form-fitting unit (30) or fixes the second mating form-fitting unit (32).

38. The conveying system as claimed in one or more of claims 1 to 36,
- **characterized in that**, during manual movement of the conveying carriage, the first and second form-fitting units are switched to freewheel.

## Revendications

1. Système de transport (10) pour des pièces ou des objets comprenant
- un profilé de guidage (14),
- des chariots de transport (12) qui sont déplaçables le long du profilé de guidage (14) et présentent chacun une unité de réception, en particulier une palette (58) ou une nacelle pour au moins une pièce ou au moins un objet,
- une première unité à liaison de forme (20) déplaçable essentiellement parallèlement au profilé de guidage (14) au moyen d'un groupe d'entraînement (52) et
- une première contre-unité à liaison de forme (22) montée sur chacun des chariots de transport (12) et pouvant être accouplée avec la première unité à liaison de forme (20),
**caractérisé par**
- une première unité d'accouplement (26) au moyen de laquelle l'accouplement de la première unité à liaison de forme (20) avec la première contre-unité à liaison de forme (22) respective peut être au choix établi ou interrompu,
- une deuxième unité à liaison de forme (30) stationnaire s'étendant essentiellement parallèlement au profilé de guidage (14),
- une deuxième contre-unité à liaison de forme (32) montée sur chacun des chariots de transport (12) et pouvant être accouplée avec la deuxième unité à liaison de forme (30) et
- une deuxième unité d'accouplement (36) au moyen de laquelle l'accouplement de la deuxième unité à liaison de forme (30) avec la deuxième contre-unité à liaison de forme (32) respective peut être au choix établi ou interrompu.

2. Système de transport selon la revendication 1,
- **caractérisé par le fait que**
chaque chariot de transport (12) présente un dispositif de commande (40) pouvant être commandé, au moyen duquel la première et la deuxième unités d'accouplement (26 ; 36) peuvent être commandées.

3. Système de transport selon la revendication 1 ou 2,
- **caractérisé par le fait que**
au moins un ou chaque chariot de transport (12) présente une unité de commutation pouvant être actionnée manuellement pour commander l'état de commutation de première et la deuxième unités d'accouplement.

4. Système de transport selon la revendication 2 ou 3,
- **caractérisé par le fait que**
l'alimentation électrique des chariots de transport (12) ou du dispositif de commande (40) et de la première et la deuxième unités d'accouplement (26 ; 36) est réalisée par une barre conductrice (42) pouvant être palpée ou contactée, s'étendant parallèlement au profilé de guidage (14) ou intégrée dans le profilé de guidage.

5. Système de transport selon la revendication 2 ou 3,
- **caractérisé par le fait que**
l'alimentation électrique des chariots de transport (12) ou du dispositif de commande (40) et de la première et la deuxième unités d'accouplement (26 ; 36) est réalisée par une unité à accumulation d'énergie disposée sur le chariot de transport (12), en particulier un accumulateur.

6. Système de transport selon l'une ou plusieurs des revendications 2 à 5,
- **caractérisé par le fait que**
le dispositif de commande présente un relais ou un circuit électronique pouvant être commandé, en particulier un microcircuit programmable.

7. Système de transport selon l'une ou plusieurs des revendications 2 à 6,
- **caractérisé par le fait que**
au moins un ou chaque chariot de transport (12) présente au moins une unité de réception de signal, en particulier un détecteur (62, 66) ou un élément récepteur de barrière lumineuse (79), qui peut être alimentée par au moins une autre unité d'émission de signal ou une unité d'émission de signal externe, en particulier un drapeau de commande (64) ou une came d'arrêt ou un élément émetteur de barrière lumineuse (78), et qui alimente le dispositif de commande (40) avec le signal reçu, suite à quoi le dispositif de commande (40) commute la première et/ou la deuxième unité d'accouplement (26 ; 36).

8. Système de transport selon l'une ou plusieurs des revendications précédentes,
- **caractérisé par le fait que**
la première et/ou la deuxième contre-unité à liaison de forme (22; 32) présente une roue dentée ou un pignon.

9. Système de transport selon la revendication 8,
- **caractérisé par le fait que**
la première unité à liaison de forme (20) est conçue comme chaîne circulante, en particulier comme chaîne triplex ou triple.

10. Système de transport selon la revendication 8 ou 9,
- **caractérisé par le fait que**
la deuxième unité à liaison de forme (30) est conçue comme crémaillère ou chaîne.

11. Système de transport selon la revendication 10,
- **caractérisé par le fait que**
la deuxième unité à liaison de forme (30) est montée sur le profilé de guidage (14).

12. Système de transport selon l'une ou plusieurs des revendications précédentes,
- **caractérisé par le fait que**
- la première contre-unité à liaison de forme (22) est en prise avec la première unité à liaison de forme (20) et présente un premier arbre tournant (24) monté sur le chariot de transport (12) de manière à pouvoir tourner,
- la première unité d'accouplement (26) est conçue comme unité d'embrayage ou de frein, en particulier comme unité d'embrayage ou de frein électromagnétique, qui accouple le premier arbre tournant (24) avec le chariot de transport (12) ou le met en roue libre.

13. Système de transport selon l'une ou plusieurs des revendications précédentes,
- **caractérisé par le fait que**
- la deuxième contre-unité à liaison de forme (32) est en prise avec la deuxième unité à liaison de forme (30) et présente un deuxième arbre tournant (34) monté sur le chariot de transport (12) de manière à pouvoir tourner,
- la deuxième unité d'accouplement (36) est conçue comme unité d'embrayage ou de frein, en particulier comme unité d'embrayage ou de frein électromagnétique, qui accouple ou fixe le deuxième arbre tournant (34) avec le chariot de transport (12) ou le met en roue libre.

14. Système de transport selon la revendication 12 ou 13,
- **caractérisé par le fait que**
la première et la deuxième unités d'accouplement (26 ; 36) sont disposées respectivement sur le premier et le deuxième arbre tournant (24 ; 34).

15. Système de transport selon l'une ou plusieurs des revendications précédentes,
- **caractérisé par le fait que**
la première et/ou la deuxième contre-unités à liaison de forme (22 ; 32) sont montées sur le chariot de transport (12) de manière à pouvoir tourner par l'intermédiaire d'une unité de roulement (50) qui est montée sur le chariot de transport (12) de manière à pouvoir se déplacer dans une direction (R) perpendiculaire à la direction de transport (F).

16. Système de transport selon la revendication 2,
- **caractérisé par le fait que**
il existe une ligne de bus de données à laquelle le dispositif de commande (40) a accès.

17. Système de transport selon la revendication 2,
- **caractérisé par le fait que**
le dispositif de commande (40) peut être commandé par un autre dispositif de commande (60) externe.

18. Système de transport selon la revendication 7,
- **caractérisé par le fait que**
ladite au moins une unité de réception de signal et ladite au moins une unité d'émission de signal sont conçues comme unité de barrière lumineuse avec récepteur et émetteur.

19. Système de transport selon la revendication 7,
- **caractérisé par le fait que**
il existe pour chaque chariot de transport (12) une unité de saisie de distance pour saisir la distance d'un chariot de transport (12) suivant à un chariot de transport (12) qui le précède, laquelle, en cas de sous-dépassement/dépassement d'une distance minimale prescrite, délivre un signal au dispositif de commande (40) qui déclenche respectivement interrompt suite à cela le mouvement de transport du chariot de transport suivant.

20. Système de transport selon la revendication 7,
- **caractérisé par le fait que**
il existe une unité de saisie de position pour saisir la position des chariots de transport le long de la voie de transport, laquelle, en cas d'atteinte d'une position prescrite, délivre un signal au dispositif de commande du chariot de transport respectif qui interrompt suite à cela le mouvement de transport du chariot de transport.

21. Système de transport selon la revendication 19,
- **caractérisé par le fait que**
l'unité de saisie de distance est réalisée **par le fait que** chaque chariot de transport présente un premier détecteur (44) et un drapeau de commande (46), le drapeau de commande (46) commutant le détecteur (44) du chariot de transport suivant lorsque la distance minimale de chariots de transport voisins est atteinte.

22. Système de transport selon l'une ou plusieurs des revendications précédentes,
- **caractérisé par le fait que**
il existe sur le chariot de transport (12) des moyens de guidage ou des éléments de guidage, en particulier des galets de guidage (16), qui correspondent au profilé de guidage (14).

23. Système de transport selon la revendication 22,
- **caractérisé par le fait que**
il existe des moyens de guidage disposés en face du profilé de guidage (14) qui, en particulier par paires, sont disposés sur une traverse pivotante (18) montée sur le chariot de transport (12) de manière à pouvoir pivoter.

24. Système de transport selon l'une ou plusieurs des revendications précédentes,
- **caractérisé par le fait que**
la première unité à liaison de forme (20) est conçue comme unité circulante pouvant être entraînée par un groupe d'entraînement (52).

25. Système de transport selon la revendication 24,
- **caractérisé par le fait que**
le groupe d'entraînement (52) présente un accouplement à friction.

26. Système de transport selon la revendication 24 ou 25,
- **caractérisé par le fait que**
le groupe d'entraînement (52) est conçu pour pouvoir être commandé afin de générer au choix un mouvement de transport cadencé, accéléré ou décéléré.

27. Système de transport selon l'une ou plusieurs des revendications précédentes,
- **caractérisé par le fait que**
la direction de transport (F) est au moins par endroits verticale.

28. Système de transport selon la revendication 27,
- **caractérisé par le fait que**
le système (10) présente au moins par endroits un tracé orienté vers le haut et ensuite vers le bas qui forme en particulier un passage.

29. Système de transport selon la revendication 28,
- **caractérisé par le fait que**
le tracé orienté vers le haut et vers le bas est formé essentiellement en U ou en V et offre une ouverture de passage pour des personnes, des véhicules ou analogues.

30. Système de transport selon l'une ou plusieurs des revendications précédentes,
- **caractérisé par le fait que**
le système (10) est conçu comme une chaîne ou bande de montage circulante vue de dessus.

31. Système de transport selon l'une ou plusieurs des revendications précédentes,
- **caractérisé par le fait que**
la direction de transport (F) est au moins par endroits méandriforme sur la verticale.

32. Système de transport selon la revendication 17,
- **caractérisé par le fait que**
le dispositif de commande externe (60) est conçu de manière à pouvoir commander chaque chariot de transport (12) individuellement par le dispositif de commande (40) respectif.

33. Système de transport selon l'une ou plusieurs des revendications précédentes,
- **caractérisé par le fait que**
le système est utilisé dans le cadre d'un système de tri.

34. Système de transport selon l'une ou plusieurs des revendications précédentes,
- **caractérisé par le fait que**
le système est utilisé dans le cadre d'un système de palettisation.

35. Système de transport selon l'une ou plusieurs des revendications précédentes,
- **caractérisé par le fait que**
le système est conçu de manière que les chariots de transport soient déplaçables par endroits de façon cadencée et/ou par endroit de façon accumulante et/ou par endroit manuellement.

36. Système de transport selon l'une ou plusieurs des revendications précédentes,
- **caractérisé par le fait que**
il existe sur au moins un chariot de transport une unité de fixation et/ou une unité d'usinage pour fixer et/ou usiner la pièce ou l'objet respectif.

37. Système de transport selon l'une ou plusieurs des revendications précédentes,
- **caractérisé par le fait que**
dans l'état de mouvement du chariot de transport (12), la première unité d'accouplement (26) met la première contre-unité à liaison de forme (22) dans l'état d'accouplement avec la première unité à liaison de forme (20) et la deuxième unité d'accouplement (36) met la deuxième contre-unité à liaison de forme (32) en roue libre, et dans l'état d'arrêt du chariot de transport (12), la première unité d'accouplement (26) met la première contre-unité à liaison de forme (22) en roue libre et la deuxième unité d'accouplement (36) passe dans l'état d'accouplement de la deuxième contre-unité à liaison de forme (32) avec la deuxième unité à liaison de forme (30), respectivement fixe la deuxième contre-unité d'accouplement (32).

38. Système de transport selon l'une ou plusieurs des revendications 1 à 36,
- **caractérisé par le fait que**
en cas de déplacement manuel du chariot de transport, la première et la deuxième contre-unités à liaison de forme sont mises en roue libre.
